# FASCICULE DE BREVET EUROPEEN

(11) **EP 3 049 277 B1**
(45) Date de publication et mention de la délivrance du brevet: **01.09.2021**
(21) Numéro de dépôt: 14802932.5
(22) Date de dépôt: 23.09.2014
(51) Int. Cl.: B60R 16/033

(54) **PROCÉDÉ ET SYSTÈME DE GESTION D'ÉNERGIE À BORD D'UN VÉHICULE**
VERFAHREN UND SYSTEM ZUR ENERGIEVERWALTUNG AN BORD EINES FAHRZEUGES
METHOD AND SYSTEM FOR MANAGING ENERGY ON BOARD A VEHICLE

(30) Priorité: 23.09.2013 FR 1359118
(43) Date de publication de la demande: 03.08.2016
(73) Titulaire: Powidian, 37170 Chambray Les Tours (FR)
(72) Inventeur: BOURGEAIS, Jean-Marie, F-78720 Saint Forget (FR)
(74) Mandataire: Gevers & Orès
(86) Numéro de dépôt international: PCT/FR2014/000212
(87) Numéro de publication internationale: WO 2015/040290

(56) Documents cités:
- EP-A1- 1 568 601
- DE-A1- 19 703 171
- US-A1- 2004 131 902
- US-A1- 2006 170 390
- US-B1- 6 516 905
- None

## Description

### DOMAINE TECHNIQUE ET OBJET DE L'INVENTION

La présente invention se rapporte au domaine de la gestion d'énergie et concerne plus particulièrement un procédé et un système de gestion d'énergie à bord d'un véhicule.

### ETAT DE LA TECHNIQUE

Un véhicule routier comprend de manière connue un moteur, permettant d'entraîner les roues du véhicule, et un réseau électrique, configuré pour alimenter des équipements électriques du véhicule. Un tel réseau électrique comporte de manière classique une batterie d'alimentation desdits équipements électriques et un alternateur agencé pour charger la batterie lorsque le moteur du véhicule fonctionne.

Les équipements du véhicule sont classiquement des équipements de conduite du véhicule tels que, par exemple, le tableau de bord, les commandes d'ouverture et de fermeture des vitres, les commandes d'actionnement des balais d'essuie-glace etc. Ces équipements électriques peuvent aussi être des équipements embarqués pour une utilisation spécifique tels que, par exemple, des appareils électroniques médicaux, un système de télécommunications mobile, un système de surveillance vidéo mobile, un système de réfrigération etc. Or, certains de ces équipements embarqués peuvent nécessiter une alimentation électrique importante.

Dans un tel cas, il est connu soit de remplacer l'alternateur par un alternateur plus puissant, soit d'ajouter une ou plusieurs sources d'énergie à bord du véhicule telles que, par exemple, des batteries supplémentaires ou un générateur Diesel.

Le remplacement de l'alternateur standard du véhicule par un alternateur spécifique, plus puissant est complexe, coûteux et augmente le niveau de bruit émis par le véhicule. De plus, dans le cas d'un véhicule standard dont le moteur est à combustion interne, l'utilisation de l'alternateur pour alimenter les équipements embarqués nécessite le fonctionnement du moteur et donc le dégagement de gaz d'échappement, ce qui n'est pas envisageable dans un espace confiné tel que, par exemple, un garage.

De même, l'ajout d'un générateur Diesel est complexe, coûteux et augmente le niveau de bruit émis par le véhicule. Là encore, dans le cas d'un véhicule standard dont le moteur est à combustion interne, l'utilisation d'un générateur Diesel pour alimenter les équipements embarqués nécessite le fonctionnement du moteur et donc le dégagement de gaz d'échappement, ce qui n'est pas envisageable dans un espace confiné.

Par ailleurs, un ajout de batteries supplémentaires est coûteux et réduit l'espace disponible dans le véhicule tout en alourdissant sa masse de manière significative. De plus, si les batteries sont connectées à l'alternateur, le nombre de batteries est limité par la puissance de l'alternateur. A contrario, si les batteries sont indépendantes de l'alternateur, leur charge doit être réalisée par un autre moyen, ce qui implique une connexion, par exemple à un réseau local fixe de distribution d'énergie, qui peut être désavantageusement coûteuse et contraignante.

En outre, dans le cas d'un remplacement de l'alternateur et/ou de l'ajout de batteries, la charge électrique des équipements connectés au réseau électrique du véhicule peut en perturber le fonctionnement, par exemple en déchargeant la ou les batteries, rendant à terme le véhicule inopérant.

Afin de résoudre ces inconvénients, il est connu de monter sur le véhicule un système de régénération d'énergie qui produit de l'hydrogène à partir d'un courant fourni par l'alternateur du véhicule.

Un tel système, décrit dans la demande de brevet WO2004049479 (A2), comprend un électrolyseur qui produit de l'hydrogène lorsqu'il est alimenté par l'alternateur du véhicule lors du fonctionnement de son moteur. L'hydrogène est stocké dans un conteneur puis utilisé afin d'alimenter une pile à combustible produisant de l'électricité. L'électricité ainsi produite peut ensuite être utilisée à tout moment, notamment lorsque le moteur du véhicule est éteint, afin d'alimenter des équipements électriques du véhicule.

Ce système présente toutefois l'inconvénient majeur de n'utiliser qu'une seule source d'énergie, ce qui présente un premier inconvénient.

Cette énergie est de plus produite uniquement lorsque le moteur du véhicule est en fonctionnement, ce qui présente un deuxième inconvénient.

Enfin, la charge électrique des équipements connectés au réseau électrique du véhicule peut en perturber le fonctionnement et rendre à terme le véhicule inopérant, ce qui présente un troisième inconvénient.

### PRESENTATION GENERALE DE L'INVENTION

La présente invention vise à remédier au moins en partie aux inconvénients des solutions existantes en proposant un système et un procédé de gestion d'énergie à bord d'un véhicule permettant de fournir de l'énergie à des équipements électriques du véhicule de manière optimisée à partir d'une pluralité de sources d'énergie sans que la charge desdits équipements ne perturbe le réseau électrique du véhicule.

A cette fin, l'invention concerne tout d'abord un procédé de gestion d'énergie à bord d'un véhicule comprenant un système de gestion d'énergie, ledit système comprenant un premier réseau électrique, un deuxième réseau électrique et au moins un équipement électrique, ledit premier réseau électrique comprenant au moins un module générateur de courant électrique configuré pour produire et/ou stocker de l'énergie électrique, ledit deuxième réseau électrique comprenant au moins une unité génératrice électrochimique et au moins un module de stockage d'énergie électrique, le procédé étant remarquable en ce que, le premier réseau électrique et le deuxième réseau électrique étant isolés galvaniquement l'un de l'autre et l'équipement électrique étant relié au deuxième réseau électrique, il comprend :
- une étape de détermination d'un niveau d'énergie électrique produite et/ou stockée par le module générateur de courant électrique,
- lorsque le niveau d'énergie électrique produite et/ou stockée par le module générateur de courant électrique est au-dessus d'un premier seuil, une étape de génération d'hydrogène par l'unité génératrice électrochimique à partir d'énergie électrique fournie par le module générateur de courant électrique, et, lorsque la puissance électrique du deuxième réseau est au-dessus d'un deuxième seuil, une étape d'alimentation en énergie électrique de l'équipement électrique par le deuxième réseau,
- lorsque le niveau d'énergie électrique produite et/ou stockée par le module générateur de courant électrique est en-dessous du premier seuil et lorsque la puissance électrique du deuxième réseau est au-dessus du deuxième seuil, une étape d'alimentation en énergie électrique de l'équipement électrique par le deuxième réseau.

Par les termes « isolés galvaniquement », on entend qu'il n'y a pas de lien galvanique entre le premier réseau électrique et le deuxième réseau électrique. En d'autres termes, le premier réseau électrique et le deuxième réseau électrique ne sont pas reliés entre eux par un conducteur d'électricité (par exemple, un fil électrique, un châssis métallique etc.), leurs masses respectives étant en outre séparées. Par exemple, un transformateur permet une isolation galvanique car seule l'induction électromagnétique est utilisée à l'interface entre les deux circuits. De même, un optocoupleur permet une isolation galvanique entre les deux circuits, un flux lumineux assurant la transmission des signaux entre les deux circuits et seuls des signaux de faible puissance électrique, par exemple des données numériques, pouvant être transmis.

L'équipement électrique est ainsi alimenté uniquement par le deuxième réseau électrique qui est avantageusement isolé galvaniquement du premier réseau et dans lequel est stockée et créée de l'énergie électrique. Une telle isolation galvanique permet d'éviter que les équipements de l'un des circuits ne viennent perturber les équipements de l'autre circuit par émission de tensions parasites.

De préférence, le véhicule comprenant un moteur configuré pour mouvoir ledit véhicule et le module générateur de courant électrique étant adapté pour délivrer un courant électrique au moins en partie à partir d'énergie mécanique générée par ledit moteur, le procédé comprend, une étape préliminaire de détection du fonctionnement ou de l'arrêt du moteur du véhicule, les étapes du procédé étant mises en œuvre lorsque le fonctionnement du moteur a été détecté. Un tel moteur peut être, par exemple, un moteur à combustion ou un moteur hybride.

Dans le cas d'un moteur électrique ou d'un moteur hybride, le module générateur de courant électrique comprend une ou plusieurs batteries de stockage d'énergie électrique utilisable par le moteur pour mouvoir le véhicule.

De préférence encore, lorsque le niveau d'énergie électrique produite et/ou stockée par le module générateur de courant électrique est au-dessus du premier seuil, le procédé comprend en outre une étape de chargement du module de stockage d'énergie électrique à partir d'énergie électrique produite et/ou stockée par le module générateur de courant électrique.

Selon un aspect de l'invention, lorsque l'arrêt du moteur a été détecté, le procédé comprend une étape d'alimentation en énergie électrique de l'équipement électrique par le deuxième réseau.

Selon un autre aspect de l'invention, lorsque le moteur est à l'arrêt, l'étape d'alimentation en énergie électrique de l'équipement électrique est réalisée à partir du module de stockage d'énergie électrique et/ou, le deuxième réseau électrique comprenant en outre au moins une source d'énergie électrique intermittente, de ladite source d'énergie électrique intermittente.

De manière avantageuse, le procédé comprend une étape de stockage de l'hydrogène généré.

Selon un aspect de l'invention, le procédé comprend en outre une étape de génération d'électricité à partir d'hydrogène généré par l'unité génératrice électrochimique, par exemple pour charger le module de stockage d'énergie électrique ou alimenter l'équipement électrique.

Selon un autre aspect de l'invention, l'alimentation en énergie électrique de l'équipement électrique par le deuxième réseau peut être interrompue ou réduite en fonction de l'énergie électrique disponible dans le deuxième réseau, par exemple lorsque le niveau d'énergie du module de stockage d'énergie électrique atteint un troisième seuil et/ou lorsque le niveau d'hydrogène stocké atteint un quatrième seuil.

De manière avantageuse, le procédé peut comprendre une étape de détermination de la présence d'un réseau de distribution d'énergie électrique local. Lorsque la présence d'un tel réseau de distribution est détectée, le module de stockage peut être alimenté et/ou de l'hydrogène peut être généré par l'unité génératrice électrochimique à partir d'énergie électrique provenant du réseau de distribution d'énergie électrique.

L'invention concerne aussi un module de gestion comprenant des moyens de détermination d'un niveau d'énergie électrique produite et/ou stockée par le module générateur de courant électrique, des premiers moyens de commande de moyens d'alimentation en énergie électrique du deuxième réseau par le premier réseau et des deuxièmes moyens de commande de moyens d'alimentation en énergie électrique de l'équipement électrique par le deuxième réseau.

De préférence, le module de gestion comprend des moyens de détection du fonctionnement ou de l'arrêt du moteur du véhicule.

L'invention concerne aussi un système de gestion d'énergie à bord d'un véhicule, ledit système comprenant un premier réseau électrique, un deuxième réseau électrique et au moins un équipement électrique, ledit premier réseau électrique comprenant au moins un module générateur de courant électrique configuré pour produire et/ou stocker de l'énergie électrique, ledit deuxième réseau électrique comprenant au moins une unité génératrice électrochimique et au moins un module de stockage d'énergie électrique, le système étant remarquable en ce que le premier réseau électrique et le deuxième réseau électrique sont isolés galvaniquement l'un de l'autre, en ce que l'équipement électrique est relié au deuxième réseau électrique et en ce que le système comprend :
- un module de gestion tel que présenté précédemment,
- des moyens d'alimentation en énergie électrique du deuxième réseau par le premier réseau, et,
- des moyens d'alimentation en énergie électrique de l'équipement électrique par le deuxième réseau.

De préférence, le système comprend au moins une source d'énergie électrique intermittente.

Une telle source intermittente peut être, par exemple, un module d'énergie solaire tel que par exemple un panneau solaire, un module éolien, un réseau de distribution d'énergie électrique local, une hydrolienne ou tout autre type de source d'énergie électrique intermittente.

On connaît de la demande de brevet WO2012/123350 A1 déposée par la Demanderesse un système de génération d'énergie à partir d'une pluralité de sources. Ce système n'est pas adapté pour fonctionner en étant couplé à un réseau électrique d'un véhicule. Le système de gestion d'énergie selon l'invention permet avantageusement l'installation, l'utilisation et le contrôle d'un tel système sur un véhicule.

Selon un aspect de l'invention, l'unité génératrice électrochimique est configurée pour produire de l'hydrogène à partir d'un premier courant électrique et générer un deuxième courant électrique à partir dudit hydrogène produit.

Selon un autre aspect de l'invention, le système comprend des moyens de stockage, par exemple, une cuve de stockage de l'hydrogène généré par l'unité génératrice électrochimique.

De préférence, le module de stockage d'énergie électrique se présente sous la forme d'une ou plusieurs batteries.

Selon une caractéristique de l'invention, le premier réseau électrique peut comprendre au moins un deuxième module de stockage d'énergie électrique, par exemple une batterie, destinée à alimenter des équipements de conduite du véhicule.

De manière préférée, le véhicule comprend un moteur configuré pour mouvoir le véhicule.

Dans le cas d'un moteur à combustion, le module générateur de courant électrique comprend avantageusement un alternateur agencé pour produire un courant électrique à partir d'énergie mécanique provenant du moteur.

Dans le cas d'un moteur hybride, le module générateur de courant électrique comprend avantageusement un alternateur agencé pour produire un courant électrique à partir d'énergie mécanique provenant du moteur et au moins une batterie de stockage d'énergie électrique agencée pour alimenter ledit moteur en énergie électrique.

Dans le cas d'un moteur électrique, le module générateur de courant électrique comprend au moins une batterie de stockage d'énergie électrique agencée pour alimenter ledit moteur en énergie électrique.

Le module générateur de courant électrique peut aussi comprendre une unité de régénération d'énergie par freinage agencée pour produire un courant électrique à partir d'énergie mécanique provenant du système de freinage du véhicule.

Selon un autre aspect de l'invention, l'équipement électrique peut être, par exemple, un calculateur, un dispositif de télécommunication, un appareil électronique médical dans une ambulance, un système de télécommunications mobile, un système de surveillance vidéo mobile, un groupe froid pour un véhicule frigorifique...

L'invention concerne aussi un véhicule comprenant un système tel que présenté précédemment.

Le véhicule peut être par exemple un véhicule de transport, par exemple logistique telle qu'un camion, notamment militaire ou pour le transport de produits réfrigérés, une ambulance etc.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre une forme de réalisation du système selon l'invention.

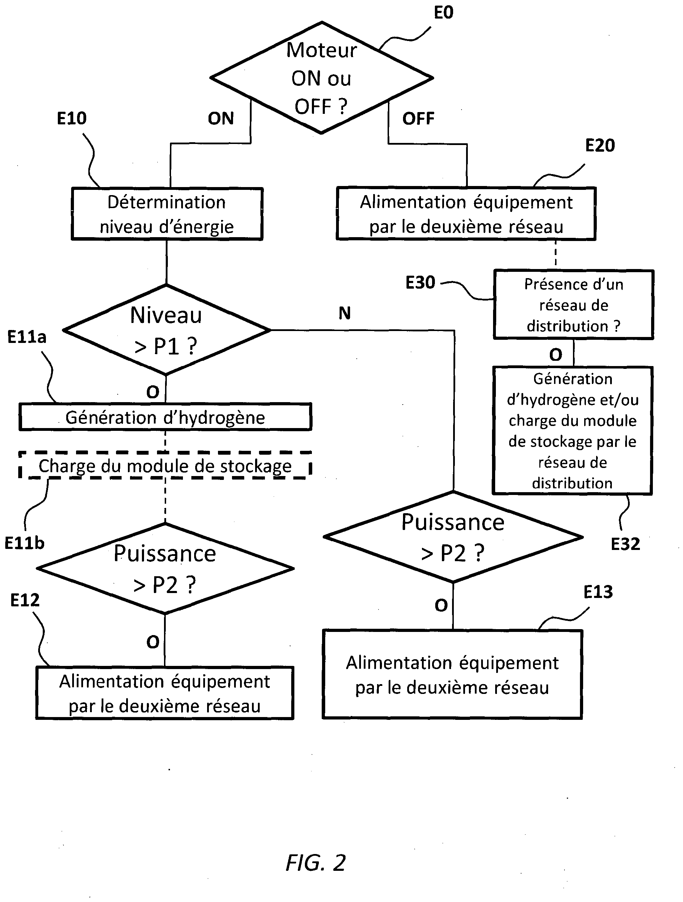

La figure 2 illustre un mode de réalisation du procédé selon l'invention.

### DESCRIPTION DETAILLEE DE L'INVENTION

### Système selon l'invention

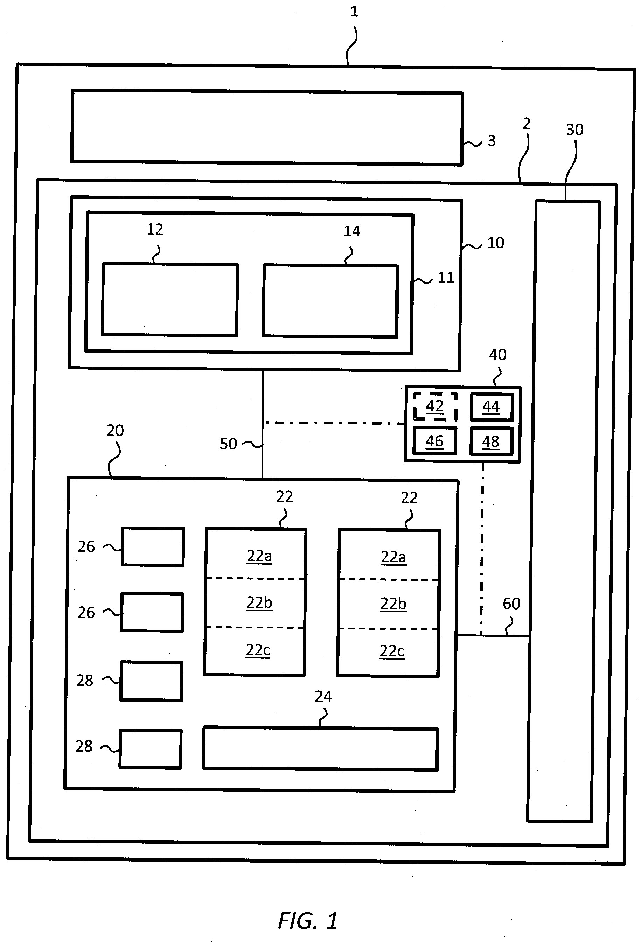

La figure 1 représente schématiquement un véhicule 1 comprenant une forme de réalisation d'un système de gestion d'énergie 2 selon l'invention. Un tel véhicule 1 peut être, par exemple, un véhicule de transport logistique militaire, médical, de transport de produits réfrigérés etc. Il va de soi que l'invention peut être appliquée à tout véhicule comprenant un ou plusieurs équipements électriques nécessitant une alimentation en énergie électrique.

Selon l'invention, un tel véhicule 1 comprend au moins un moteur 3 configuré pour mouvoir le véhicule 1.

Le moteur peut être un moteur à combustion, un moteur hybride ou un moteur électrique.

Le système 2 selon l'invention comprend un premier réseau électrique 10, un deuxième réseau électrique 20 relié audit premier réseau électrique 10 par des moyens d'alimentation en énergie électrique 50, au moins un équipement électrique 30 relié audit deuxième réseau électrique 20 par des moyens d'alimentation en énergie électrique 60 et un module de gestion d'énergie 40.

### Premier réseau électrique 10

Le premier réseau électrique 10 comprend un module générateur de courant électrique 11.

Dans le cas d'un moteur à combustion ou d'un moteur hybride, le module générateur de courant électrique 11 comprend un alternateur 12 adapté pour générer un courant électrique à partir d'énergie mécanique provenant du moteur 3 lorsque celui-ci est en fonctionnement.

Dans l'exemple illustré, le module générateur de courant électrique 11 comprend en outre une unité de régénération d'énergie par freinage 14 (« regenerative braking » en langue anglaise) connue de l'homme du métier.

L'unité de régénération d'énergie par freinage 14 est adaptée pour générer un courant électrique à partir d'énergie mécanique provenant du freinage des roues (non représentées) du véhicule 1 dont le mouvement est généré par le moteur 3.

Dans le cas d'un moteur électrique, le module générateur de courant électrique 11 comprend une ou plusieurs batteries d'alimentation (non représentées) dudit moteur agencées pour stocker de l'énergie électrique.

Le premier réseau électrique 10, qui est le réseau électrique standard du véhicule 1, c'est-à-dire le réseau de fourniture d'énergie électrique aux équipements de conduite (non représentés) du véhicule 1, comprend de manière classique une batterie de stockage d'énergie électrique (non représentée) destinée à alimenter des équipements de conduite du véhicule 1 tels que, par exemple, le tableau de bord du véhicule 1 ou le démarreur. Une telle batterie peut être rechargée par l'alternateur 12 et/ou par l'unité de régénération d'énergie par freinage 14.

Le premier réseau électrique 10 comprend un ou plusieurs modules de conversion de tension AC/DC (non représentés) montés en parallèle à la sortie du module générateur de courant électrique 11.

### Deuxième réseau électrique 20

Dans l'exemple illustré à la figure 1, le deuxième réseau électrique 20 comprend deux unités génératrices électrochimiques 22, un module de stockage 24 d'énergie électrique et une pluralité de sources d'énergie électrique intermittentes comprenant deux modules d'énergie solaire 26 et deux modules éoliens 28. Il va de soi que le deuxième réseau électrique 20 peut comprendre une seule unité génératrice électrochimique 22 ou plus de deux unités génératrices électrochimiques 22 et/ou un seul module d'énergie solaire 26 ou plus de deux modules d'énergie solaire 26.

Une unité génératrice électrochimique 22 est configurée pour produire de l'hydrogène à partir d'un premier courant électrique et générer un deuxième courant électrique à partir dudit hydrogène produit.

Plus précisément, une telle unité génératrice électrochimique 22 comprend un électrolyseur 22a configurée pour générer de l'hydrogène à partir du premier courant électrique, un conteneur 22b de stockage dudit hydrogène et une pile à combustible 22c configurée pour générer le deuxième courant électrique à partir de l'hydrogène stocké dans le conteneur 22b.

Le premier courant électrique peut être fourni par l'alternateur 12, par l'unité de régénération d'énergie par freinage 14, par une batterie d'alimentation d'un moteur électrique (non représentés) ou bien par une source d'énergie électrique intermittente 26, 28.

Le module de stockage d'énergie électrique 24 peut se présenter sous la forme d'une ou plusieurs batteries électriques générant, par exemple, une tension continue de 24 V.

Le module d'énergie solaire 26 est agencé pour générer un courant électrique à partir d'énergie solaire et peut comprendre une pluralité de panneaux solaires,

Le module éolien 28 est agencé pour générer un courant électrique à partir de l'énergie éolienne et comprend une éollenne. De même, il va de soi que le deuxième réseau électrique 20 peut comprendre un seul module éolien 28 ou plus de deux modules éoliens 28.

Il va aussi de soi que le deuxième réseau électrique 20 peut comprendre d'autres sources d'énergie électrique intermittentes, par exemple de type hydrolienne ou autre.

Le deuxième réseau électrique 20 peut en outre comprendre un ou plusieurs modules de conversion de tension AC/DC montés en parallèle à la sortie des modules éoliens 28 ou au niveau d'une connexion à un réseau de distribution d'énergie électrique local (connu sous le nom de « grid » en langue anglaise), et un ou plusieurs modules de conversion de tension AC/DC montés en parallèle à la sortie des modules d'énergie solaire 26.

Le premier réseau électrique 10 et le deuxième réseau électrique 20 sont isolés galvaniquement l'un de l'autre. Pour ce faire, le système 2 peut comprendre, par exemple, un ou une pluralité de transformateurs électriques (pour une conversion d'énergie de type analogique) et/ou un ou une pluralité d'optocoupleurs (non représentés) (pour une conversion d'énergie de type numérique) montés entre le premier réseau électrique 10 et le deuxième réseau électrique 20.

### Equipement électrique 30

Le ou les équipements électriques 30 montés dans le véhicule 1 peuvent nécessiter une consommation importante d'énergie et sont, de préférence, des équipements destinés à une utilisation externe à la conduite du véhicule 1 tels que, par exemple, un calculateur, un dispositif de télécommunication, des appareils électroniques médicaux d'une ambulance, un système de télécommunications mobile, un système de surveillance vidéo mobile, un système de réfrigération d'un véhicule frigorifique etc.

### Module de gestion 40

Dans cet exemple, le module de gestion 40 comprend des moyens de détection 42, des moyens de détermination 44, des premiers moyens de commande 46 et des deuxièmes moyens de commande 48.

Les moyens de détection 42 permettent la détection du fonctionnement ou de l'arrêt du moteur 3 du véhicule 1. Dans le cas d'un moteur électrique, le module de gestion ne comporte pas nécessairement de moyens de détection 42 puisque l'énergie fournie par le module générateur de courant électrique 11 est stockée dans une ou plusieurs batteries (non représentées) et peut être fournie aussi bien lorsque le moteur est en fonctionnement qu'à l'arrêt.

Les moyens de détermination 44 permettent la détermination d'un niveau d'énergie électrique produite par le module générateur de courant électrique 11 lorsque le moteur 3 du véhicule 1 fonctionne.

Les premiers moyens de commande 46 permettent de commander les moyens d'alimentation 50 en énergie électrique du deuxième réseau 20 par le premier réseau 10.

Les deuxièmes moyens de commande 48 permettent de commander les moyens d'alimentation 60 en énergie électrique de l'équipement électrique 30 par le deuxième réseau 20.

Le module de gestion 40 peut se présenter, par exemple, sous la forme d'un calculateur configuré pour mettre en œuvre les moyens de détection 42, les moyens de détermination 44, les premiers moyens de commande 46 et les deuxièmes moyens de commande 48.

### Mise en œuvre de l'invention

### a) Moteur à combustion ou moteur hybride

Le procédé selon l'invention comprend une étape E0 de détection du fonctionnement ou de l'arrêt du moteur 3 du véhicule 1.

Lorsque le moteur 3 fonctionne, c'est-à-dire lorsque de l'énergie électrique est produite par le module générateur de courant électrique 11, les moyens de détermination 44 du module de gestion 30 déterminent, dans une étape E10, le niveau d'énergie électrique produite par le module générateur de courant électrique 11.

Lorsque le niveau d'énergie électrique produite par le module générateur de courant électrique 11 est au-dessus d'un premier seuil P1, les moyens de commande 46 du module de gestion 40 commandent, dans une étape E11a, la fourniture par le module générateur de courant électrique 11 d'un courant électrique permettant à l'électrolyseur 22a de l'unité génératrice électrochimique 22 de générer d'hydrogène afin de le stocker dans le conteneur 22b pour qu'elle soit ultérieurement convertie en énergie électrique par la pile à combustible 22c. Dans cet exemple, la fourniture par le module générateur de courant électrique 11 d'un courant électrique permet aussi de charger le module de stockage d'énergie électrique 24 (étape E11b).

Lorsque la puissance électrique du deuxième réseau 20 est au-dessus d'un deuxième seuil P2, les moyens de commande 46 du module de gestion 40 commandent, dans une étape E12, l'alimentation en énergie électrique de l'équipement électrique 30 par le deuxième réseau 20, prioritairement par le module de stockage 24 mais aussi, lorsqu'ils produisent de l'énergie, par l'un ou l'ensemble des modules d'énergie solaire 26 et des modules éoliens 28.

Lorsque le niveau d'énergie électrique produite par le module générateur de courant électrique 11 est en-dessous du premier seuil P1 et lorsque la puissance électrique du deuxième réseau 20 est au-dessus du deuxième seuil P2, les moyens de commande 46 du module de gestion 40 commandent, dans une étape E13, l'alimentation en énergie électrique de l'équipement électrique 30 par le deuxième réseau 20, prioritairement par le module de stockage 24 mais aussi, lorsqu'ils produisent de l'énergie, par l'un ou l'ensemble des modules d'énergie solaire 26 et des modules éoliens 28.

L'alimentation en énergie électrique de l'équipement électrique 30 par le deuxième réseau 20 peut être interrompue ou réduite en fonction de l'énergie électrique disponible dans le deuxième réseau 20, par exemple lorsque le niveau d'énergie du module de stockage d'énergie électrique 24 atteint le troisième seuil P3 et/ou lorsque le niveau d'hydrogène stocké dans le conteneur 22b atteint un quatrième seuil P4 minimal.

Enfin, lorsque le moteur 3 du véhicule 1 est à l'arrêt, l'équipement électrique 30 est alimenté, dans une étape E20, uniquement par le deuxième réseau, là encore prioritairement par le module de stockage 24 mais aussi, lorsqu'ils produisent de l'énergie électrique, par l'un ou l'ensemble des modules d'énergie solaire 26 et des modules éoliens 28.

Lorsque le véhicule 1 est arrêté dans un espace confiné ou n'est pas utilisé, une étape E30 de détermination de la présence d'un réseau de distribution d'énergie électrique local (par exemple connu de l'homme du métier sous le nom de « grid » en langue anglaise) peut être réalisée par le module de gestion 40.

Lorsque la présence d'un tel réseau de distribution est détectée, le module de stockage 24 peut être chargé et/ou de l'hydrogène est généré par l'unité génératrice électrochimique, dans une étape E32, à partir d'énergie électrique fournie par le réseau de distribution d'énergie électrique local.

### b) Moteur électrique

Dans le cas d'un moteur électrique, lorsque le module générateur de courant électrique 11 comprend une ou plusieurs batteries de stockage d'énergie électrique pour l'alimentation dudit moteur 3, les moyens de détermination 44 du module de gestion 30 déterminent, dans une étape E10, le niveau d'énergie électrique stockée dans les batteries du module générateur de courant électrique 11.

Lorsque le niveau d'énergie électrique stockée par le module générateur de courant électrique 11 est au-dessus d'un premier seuil P1, les moyens de commande 46 du module de gestion 40 commandent, dans une étape E11a, la fourniture par le module générateur de courant électrique 11 d'un courant électrique permettant à l'électrolyseur 22a de l'unité génératrice électrochimique 22 de générer d'hydrogène afin de le stocker dans le conteneur 22b pour qu'elle soit ultérieurement convertie en énergie électrique par la pile à combustible 22c. Dans cet exemple, la fourniture par le module générateur de courant électrique 11 d'un courant électrique permet aussi de charger le module de stockage d'énergie électrique 24 (étape E11b).

Lorsque la puissance électrique du deuxième réseau 20 est au-dessus d'un deuxième seuil P2, les moyens de commande 46 du module de gestion 40 commandent, dans une étape E12, l'alimentation en énergie électrique de l'équipement électrique 30 par le deuxième réseau 20, prioritairement par le module de stockage 24 mais aussi, lorsqu'ils produisent de l'énergie, par l'un ou l'ensemble des modules d'énergie solaire 26 et des modules éoliens 28.

Lorsque le niveau d'énergie électrique stockée par le module générateur de courant électrique 11 est en-dessous du premier seuil P1 et lorsque la puissance électrique du deuxième réseau 20 est au-dessus du deuxième seuil P2, les moyens de commande 46 du module de gestion 40 commandent, dans une étape E13, l'alimentation en énergie électrique de l'équipement électrique 30 par le deuxième réseau 20, prioritairement par le module de stockage 24 mais aussi, lorsqu'ils produisent de l'énergie, par l'un ou l'ensemble des modules d'énergie solaire 26 et des modules éoliens 28.

L'alimentation en énergie électrique de l'équipement électrique 30 par le deuxième réseau 20 peut être interrompue ou réduite en fonction de l'énergie électrique disponible dans le deuxième réseau 20, par exemple lorsque le niveau d'énergie du module de stockage d'énergie électrique 24 atteint le troisième seuil P3 et/ou lorsque le niveau d'hydrogène stocké dans le conteneur 22b atteint un quatrième seuil P4 minimal.

Enfin, lorsque le niveau d'énergie électrique stockée par le module générateur de courant électrique 11 est en-dessous du premier seuil P1, l'équipement électrique 30 est alimenté uniquement par le deuxième réseau 20, là encore prioritairement par le module de stockage 24 mais aussi, lorsqu'ils produisent de l'énergie électrique, par l'un ou l'ensemble des modules d'énergie solaire 26 et des modules éoliens 28.

Lorsque le véhicule 1 est arrêté dans un espace confiné ou n'est pas utilisé, une étape E30 de détermination de la présence d'un réseau de distribution d'énergie électrique local (par exemple connu de l'homme du métier sous le nom de « grid » en langue anglaise) peut être réalisée par le module de gestion 40.

Lorsque la présence d'un tel réseau de distribution est détectée, le module de stockage 24 et/ou les batteries d'alimentation du moteur électrique peuvent être chargées et/ou de l'hydrogène peut être généré par l'unité génératrice électrochimique 22, dans une étape E32, à partir d'énergie électrique fournie par le réseau de distribution d'énergie électrique local.

L'invention permet donc avantageusement de gérer l'énergie électrique du véhicule 1 de manière optimisée en fonction de l'état du moteur 3 et des intervalles de temps auxquels l'énergie électrique est produite et est disponible.

L'utilisation de deux réseaux isolés galvaniquement permet cette gestion optimisée tout en évitant que la charge électrique des équipements 30 du véhicule 1 ne perturbe le premier réseau électrique 10 du véhicule 1 auquel sont reliés ses équipements de conduite et inversement.

## Revendications

1. Procédé de gestion d'énergie à bord d'un véhicule (1) comprenant un système (2) de gestion d'énergie, ledit système (2) comprenant un premier réseau électrique (10), un deuxième réseau électrique (20) et au moins un équipement électrique (30), ledit premier réseau électrique (10) comprenant au moins un module générateur de courant électrique (11) configuré pour produire et/ou stocker de l'énergie électrique, ledit deuxième réseau électrique (20) comprenant au moins une unité génératrice électrochimique (22) et au moins un module de stockage d'énergie électrique (24), le procédé étant **caractérisé en ce que**, le premier réseau électrique (10) et le deuxième réseau électrique (20) étant isolés galvaniquement l'un de l'autre et l'équipement électrique (30) étant relié au deuxième réseau électrique (20), il comprend :
- une étape (E10) de détermination d'un niveau d'énergie électrique produite par le module générateur de courant électrique (11),
- lorsque le niveau d'énergie électrique produite et/ou stockée par le module générateur de courant électrique (11) est au-dessus d'un premier seuil, une étape (E11a) de génération d'hydrogène par l'unité génératrice électrochimique (22) à partir d'énergie électrique produite par le module générateur de courant électrique (11), et, lorsque la puissance électrique du deuxième réseau (20) est au-dessus d'un deuxième seuil, une étape (E12) d'alimentation en énergie électrique de l'équipement électrique (30) par le deuxième réseau (20),
- lorsque le niveau d'énergie électrique produite et/ou stockée par le module générateur de courant électrique (11) est en-dessous du premier seuil et lorsque la puissance électrique du deuxième réseau (20) est au-dessus du deuxième seuil, une étape (E13) d'alimentation en énergie électrique de l'équipement électrique (30) par le deuxième réseau (20).

2. Procédé selon la revendication 1, dans lequel, le véhicule (1) comprenant un moteur (3) configuré pour mouvoir ledit véhicule (1) et le module générateur de courant électrique (11) étant adapté pour délivrer un courant électrique au moins en partie à partir d'énergie mécanique générée par ledit moteur (3), le procédé comprend, une étape préliminaire (E0) de détection du fonctionnement ou de l'arrêt du moteur (3) du véhicule (1), les étapes du procédé étant mises en œuvre lorsque le fonctionnement du moteur (3) a été détecté.

3. Procédé selon l'une des revendications précédentes, dans lequel, lorsque le niveau d'énergie électrique produite et/ou stockée par le module générateur de courant électrique (11) est au-dessus du premier seuil, le procédé comprend en outre une étape de chargement (E11b) du module de stockage d'énergie électrique (24) à partir d'énergie électrique produite et/ou stockée par le module générateur de courant électrique (11).

4. Procédé selon l'une des revendications précédentes, dans lequel l'alimentation en énergie électrique de l'équipement électrique (30) par le deuxième réseau (20) peut être interrompue ou réduite en fonction de l'énergie disponible dans le deuxième réseau électrique (20), lorsque le niveau d'énergie du module de stockage d'énergie électrique (24) atteint un troisième seuil et/ou lorsque le niveau d'hydrogène stocké dans un conteneur (22b) de l'unité génératrice électrochimique (22) atteint un quatrième seuil.

5. Procédé selon l'une des revendications précédentes, ledit procédé comprenant, lorsque l'arrêt du moteur (3) a été détecté, une étape d'alimentation (E20) en énergie électrique de l'équipement électrique (30) par le deuxième réseau (20).

6. Procédé selon la revendication précédente, dans lequel l'étape d'alimentation (E20) en énergie électrique de l'équipement électrique (30) est réalisée à partir du module de stockage d'énergie électrique (24) et/ou de la source d'énergie électrique intermittente (26, 28).

7. Procédé selon l'une des revendications précédentes, ledit procédé comprenant en outre une étape (E32) de génération d'électricité à partir d'hydrogène généré par l'unité génératrice électrochimique (22) pour charger le module de stockage d'énergie électrique (24) ou pour alimenter l'équipement électrique (30).

8. Système de gestion de l'énergie à bord d'un véhicule (1), ledit système (2) comprenant un premier réseau électrique (10), un deuxième réseau électrique (20) et au moins un équipement électrique (30), ledit premier réseau électrique (10) comprenant au moins un module générateur de courant électrique (11) configuré pour produire et/ou stocker de l'énergie électrique, ledit deuxième réseau électrique (20) comprenant au moins une unité génératrice électrochimique (22) et au moins un module de stockage d'énergie électrique (24), le système (1) étant **caractérisé en ce que** le premier réseau électrique (10) et le deuxième réseau électrique (20) sont isolés galvaniquement l'un de l'autre, **en ce que** l'équipement électrique (30) est relié au deuxième réseau électrique (20) et **en ce qu'**il comprend :
- un module de gestion (40) comprenant des moyens de détermination (44) d'un niveau d'énergie électrique produite et/ou stockée par le module générateur de courant électrique (11), des premiers moyens de commande (46) de moyens d'alimentation (50) en énergie électrique du deuxième réseau (20) par le premier réseau (10) et des deuxièmes moyens de commande (48) de moyens d'alimentation (60) en énergie électrique de l'équipement électrique (30) par le deuxième réseau (20),
- des moyens d'alimentation (46) en énergie électrique du deuxième réseau (20) par le premier réseau (10), et,
- des moyens d'alimentation (48) en énergie électrique de l'équipement électrique (30) par le deuxième réseau (20).

9. Système selon la revendication précédente, ledit système comprenant en outre au moins une source d'énergie électrique intermittente (26, 28) se présentant, par exemple, sous la forme d'un module d'énergie solaire (26), un module éolien (28), un réseau de distribution d'énergie électrique local et/ou une hydrolienne.

10. Véhicule comprenant un système selon l'une des revendications 8 et 9.

## Patentansprüche

1. Verfahren zur Energieverwaltung an Bord eines Fahrzeugs (1), das ein System (2) zur Energieverwaltung umfasst, wobei das System (2) ein erstes Elektrizitätsnetz (10), ein zweites Elektrizitätsnetz (20) und mindestens eine elektrische Ausrüstung (30) umfasst, wobei das erste Elektrizitätsnetz (10) mindestens ein Erzeugungsmodul für elektrischen Strom (11) umfasst, konfiguriert, um elektrische Energie zu produzieren und/oder zu speichern, wobei das zweite Elektrizitätsnetz (20) mindestens eine elektrochemische erzeugende Einheit (22) und mindestens ein Speichermodul für elektrische Energie (24) umfasst, wobei das Verfahren **dadurch gekennzeichnet ist, dass** es, wenn das erste Elektrizitätsnetz (10) und das zweite Elektrizitätsnetz (20) galvanisch voneinander getrennt sind und die elektrische Ausrüstung (30) an das zweite Elektrizitätsnetz (20) angeschlossen ist, umfasst:
- einen Schritt (E10) des Bestimmens eines Niveaus an elektrischer Energie, die von dem Erzeugungsmodul für elektrischen Strom (11) produziert wird,
- wenn das Niveau an elektrischer Energie, die von dem Erzeugungsmodul für elektrischen Strom (11) produziert und/oder gespeichert wird, über einer ersten Schwelle liegt, einen Schritt (E11a) des Erzeugens von Wasserstoff durch die elektrochemische erzeugende Einheit (22) anhand von elektrischer Energie, die von dem Erzeugungsmodul für elektrischen Strom (11) produziert wird, und, wenn die elektrische Leistung des zweiten Netzes (20) über einer zweiten Schwelle liegt, einen Schritt (E12) der Speisung der elektrischen Ausrüstung (30) mit elektrischer Energie durch das zweite Netz (20),
- wenn das Niveau an elektrischer Energie, die von dem Erzeugungsmodul für elektrischen Strom (11) produziert und/oder gespeichert wird, unter der ersten Schwelle liegt und wenn die elektrische Leistung des zweiten Netzes (20) über der zweiten Schwelle liegt, einen Schritt (E13) der Speisung der elektrischen Ausrüstung (30) mit elektrischer Energie durch das zweite Netz (20).

2. Verfahren nach Anspruch 1, wobei, wenn das Fahrzeug (1) einen Motor (3) umfasst, konfiguriert, um das Fahrzeug (1) zu bewegen, und das Erzeugungsmodul für elektrischen Strom (11) geeignet ist, mindestens zum Teil anhand von mechanischer Energie, die von dem Motor (3) erzeugt wird, einen elektrischen Strom bereitzustellen, das Verfahren einen vorausgehenden Schritt (E0) des Erkennens des Betriebs oder des Stillstands des Motors (3) des Fahrzeugs (1) umfasst, wobei die Schritte des Verfahrens umgesetzt werden, wenn der Betrieb des Motors (3) erkannt wurde.

3. Verfahren nach einem der vorstehenden Ansprüche, wobei, wenn das Niveau an elektrischer Energie, die von dem Erzeugungsmodul für elektrischen Strom (11) produziert und/oder gespeichert wird, über der ersten Schwelle liegt, das Verfahren weiter einen Schritt des Ladens (E11b) des Speichermoduls für elektrische Energie (24) anhand von elektrischer Energie, die von dem Erzeugungsmodul für elektrischen Strom (11) produziert und/oder gespeichert wird, umfasst.

4. Verfahren nach einem der vorstehenden Ansprüche, wobei die Speisung der elektrischen Ausrüstung (30) mit elektrischer Energie durch das zweite Netz (20) in Abhängigkeit von der in dem zweiten Elektrizitätsnetz (20) verfügbaren Energie unterbrochen oder reduziert werden kann, wenn das Energieniveau des Speichermoduls für elektrische Energie (24) eine dritte Schwelle erreicht und/oder wenn das Niveau an Wasserstoff, der in einem Behälter (22b) der elektrochemischen erzeugenden Einheit (22) gespeichert ist, eine vierte Schwelle erreicht.

5. Verfahren nach einem der vorstehenden Ansprüche, wobei das Verfahren, wenn der Stillstand des Motors (3) erkannt wurde, einen Schritt der Speisung (E20) der elektrischen Ausrüstung (30) mit elektrischer Energie durch das zweite Netz (20) umfasst.

6. Verfahren nach dem vorstehenden Anspruch, wobei der Schritt der Speisung (E20) der elektrischen Ausrüstung (30) mit elektrischer Energie anhand des Speichermoduls für elektrische Energie (24) und/oder der intermittierenden Quelle elektrischer Energie (26, 28) ausgeführt wird.

7. Verfahren nach einem der vorstehenden Ansprüche, wobei das Verfahren weiter einen Schritt (E32) des Erzeugens von Elektrizität anhand von Wasserstoff, der von der elektrochemischen erzeugenden Einheit (22) erzeugt wird, umfasst, um das Speichermodul für elektrische Energie (24) zu laden oder um die elektrische Ausrüstung (30) zu speisen.

8. System zur Verwaltung der Energie an Bord eines Fahrzeugs (1), wobei das System (2) ein erstes Elektrizitätsnetz (10), ein zweites Elektrizitätsnetz (20) und mindestens eine elektrische Ausrüstung (30) umfasst, wobei das erste Elektrizitätsnetz (10) mindestens ein Erzeugungsmodul für elektrischen Strom (11) umfasst, konfiguriert, um elektrische Energie zu produzieren und/oder zu speichern, wobei das zweite Elektrizitätsnetz (20) mindestens eine elektrochemische erzeugende Einheit (22) und mindestens ein Speichermodul für elektrische Energie (24) umfasst, wobei das System (1) **dadurch gekennzeichnet ist, dass** das erste Elektrizitätsnetz (10) und das zweite Elektrizitätsnetz (20) galvanisch voneinander getrennt sind, dadurch, dass die elektrische Ausrüstung (30) an das zweite Elektrizitätsnetz (20) angeschlossen ist, und dadurch, dass es umfasst:
- ein Verwaltungsmodul (40), das Mittel zur Bestimmung (44) eines Niveaus an elektrischer Energie, die von dem Erzeugungsmodul für elektrischen Strom (11) produziert und/oder gespeichert wird, erste Mittel zum Steuern (46) von Mitteln zur Speisung (50) des zweiten Netzes (20) mit elektrischer Energie durch das erste Netz (10), und zweite Mittel zum Steuern (48) von Mitteln zur Speisung (60) der elektrischen Ausrüstung (30) mit elektrischer Energie durch das zweite Netz (20) umfasst,
- Mittel zur Speisung (46) des zweiten Netzes (20) mit elektrischer Energie durch das erste Netz (10) und
- Mittel zur Speisung (48) der elektrischen Ausrüstung (30) mit elektrischer Energie durch das zweite Netz (20).

9. System nach dem vorstehenden Anspruch, wobei das System weiter mindestens eine intermittierende Quelle elektrischer Energie (26, 28) umfasst, die zum Beispiel in Form eines Solarenergiemoduls (26), eines Windkraftmoduls (28), eines lokalen Verteilnetzes für elektrische Energie und/oder eine Gezeitenturbine vorliegt.

10. Fahrzeug, das ein System nach einem der Ansprüche 8 und 9 umfasst.

## Claims

1. Method for managing power on board a vehicle (1) comprising a power management system (2), said system (2) comprising a first electrical network (10), a second electrical network (20) and at least one piece of electrical equipment (30), said first electrical network (10) comprising at least one module (11) for generating electrical current that is configured to produce and/or store electrical power, said second electrical network (20) comprising at least one electrochemical generator unit (22) and at least one module (24) for storing electrical power, the method being **characterised in that**, the first electrical network (10) and the second electrical network (20) being galvanically isolated from one another and the electrical equipment (30) being connected to the second electrical network (20), it comprises:
- a step (E10) of determining a level of electrical power produced by the module (11) for generating electrical current,
- when the level of electrical power produced and/or stored by the module (11) for generating electrical current is above a first threshold, a step (E11a) of generating hydrogen by means of the electrochemical generator unit (22) from electrical power produced by the module (11) for generating electrical current and, when the electrical power of the second network (20) is above a second threshold, a step (E12) of providing electrical power to the electrical equipment (30) by means of the second network (20),
- when the level of electrical power produced and/or stored by the module (11) for generating electrical current is below the first threshold and when the electrical power of the second network (20) is above the second threshold, a step (E13) of providing electrical power to the electrical equipment (30) by means of the second network (20).

2. Method according to claim 1, wherein, the vehicle (1) comprising an engine (3) designed to move said vehicle (1) and the module (11) for generating electrical current being suitable for providing an electrical current at least in part from mechanical power generated by said engine (3), the method comprises a preliminary step (E0) of detecting whether the engine (3) of the vehicle (1) is in operation or switched off, the method steps being implemented when it has been detected that the engine (3) is in operation.

3. Method according to any of the preceding claims, wherein, when the level of electrical power produced and/or stored by the module (11) for generating electrical current is above the first threshold, the method further comprises a step (E11b) of charging the module (24) for storing electrical power from electrical power produced and/or stored by the module (11) for generating electrical current.

4. Method according to any of the preceding claims, wherein the supply of electrical power to the electrical equipment (30) by the second network (20) may be interrupted or reduced depending on the power available in the second electrical network (20) when the power level of the module (24) for storing electrical power reaches a third threshold and/or when the level of hydrogen stored in a container (22b) of the electrochemical generator unit (22) reaches a fourth threshold.

5. Method according to any of the preceding claims, said method comprising, when it has been detected that the engine (3) is switched off, a step (E20) of supplying electrical power to the electrical equipment (30) by means of the second network (20).

6. Method according to the preceding claim, wherein the step (E20) of supplying electrical power to the electrical equipment (30) is carried out from the module (24) for storing electrical power and/or from the intermittent source (26, 28) of electrical power.

7. Method according to any of the preceding claims, said method further comprising a step (E32) of generating electricity from hydrogen generated by the electrochemical generator unit (22) in order to charge the module (24) for storing electrical power or to power the electrical equipment (30).

8. System for managing power on board a vehicle (1), said system (2) comprising a first electrical network (10), a second electrical network (20) and at least one piece of electrical equipment (30), said first electrical network (10) comprising at least one module (11) for generating electrical current that is configured to produce and/or store electrical power, said second electrical network (20) comprising at least one electrochemical generator unit (22) and at least one module (24) for storing electrical power, the system (1) being **characterised in that** the first electrical network (10) and the second electrical network (20) are galvanically isolated from one another, **in that** the electrical equipment (30) is connected to the second electrical network (20) and **in that** it comprises:
- a management module (40) comprising means (44) for determining a level of electrical power produced and/or stored by the module (11) for generating electrical current, first means (46) for controlling means (50) for supplying electrical power to the second network (20) by means of the first network (10) and second means (48) for controlling means (60) for supplying electrical power to the electrical equipment (30) by means of the second network (20),
- means (46) for supplying electrical power to the second network (20) by means of the first network (10), and
- means (48) for supplying electrical power to the electrical equipment (30) by means of the second network (20).

9. System according to the preceding claim, said system further comprising at least one intermittent source (26, 28) of electrical power which is, for example, in the form of a solar-powered module (26), a wind-powered module (28), a local electrical-power distribution network and/or a hydrokinetic turbine.

10. Vehicle comprising a system according to any of claims 8 and 9.
